# EUROPEAN PATENT SPECIFICATION

(11) **EP 0 802 955 B1**
(45) Date of publication and mention of the grant of the patent: **13.02.2002**
(21) Application number: 95938110.4
(22) Date of filing: 25.09.1995
(51) Int. Cl.: C09D 11/16

(54) **A MARKING COMPOSITION**
MARKIERUNGSZUSAMMENSETZUNG
COMPOSITIONS DE MARQUAGE

(30) Priority: 23.09.1994 US 311547
(43) Date of publication of application: 29.10.1997
(73) Proprietor: Coller, Miriam, Jamaica, NY 11432 (US)
(72) Inventor: Coller, Miriam, Jamaica, NY 11432 (US)
(74) Representative: Wasmeier, Alfons, Dipl.-Ing.
(86) International application number: US9512376
(87) International publication number: WO9609351

(56) References cited:
- US-A- 4 792 357
- US-A- 5 397 387
- DATABASE WPI Week 8019 Derwent Publications Ltd., London, GB; AN 80-33697c XP002057482 & JP 55 043 153 A (SUWA SEIKOSHA) , 26 March 1980
- DATABASE WPI Week 9616 Derwent Publications Ltd., London, GB; AN 96-158550 XP002057483 & KR 9 406 148 A (DAEHAN TEXTBOOK PRINTING) , 8 July 1994
- DATABASE WPI Week 8634 Derwent Publications Ltd., London, GB; AN 86-223224 XP002057484 & JP 61 155 481 A (PENTEL) , 15 July 1986

## Description

### Field of the Invention

The invention relates to aqueous marking compositions and methods for temporary coating of surfaces which are readily washable with water when desired and can be readily removed by water, such as rain, from a surface of a substrate to which it is applied, for example outdoor surfaces covered in snow or ice, surfaces for trail marking, sports field marking, hazard marking, sand, cement, brick, stone, fabrics, etc.

### Background of the Invention

A number of marking compositions are used for various purposes.

US Patent No. 3 288 618 (DeVries) relates to a colored reflective coating composition.

US Patent No. 2 371 353 (Fain) relates to a deicing composition applied as coating to aircraft parts. The composition is formed of lithium chloride combined with potassium chromate, carboxymethyl cellulose and a wetting agent. The wetting agent can be Triton X-100 which is an alkylated aryl polyether alcohol such as isooctylphenyl ether of polyethylene glycol.

US Patent No. 24 16 103 (Lampton et al) discloses a de-icing paint or coating which is applied to aircraft parts or accessories such as propellers, rotors, wings, etc. The composition comprises a resin, a wetting agent, a freezing point depressing material. A wetting agent is selected from the group consisting of salts of sulphated alcohols and salts of sulphated acids, salts of sulphated fatty acid amides, salts of sulphated fatty acids esters. The freeze depressant may be barium thiocyanate or other salts such as sodium chloride and calcium chloride.

US Patent No. 27 83 209 (Pessel) relates to a marine marking composition comprising a glue and light colored finely divided solid material such as polyalkylene glycol, methyl cellulose, polyvinyl alcohol.

US Patent No. 32 97 585 (Hayden) discloses a visual indicator comprising aqueous solution of a fluorescent and an alcohol soluble basic dye dissolved in a mixture of glacial acetic acid, ethanol, glycerine and propionic acid.

Most known marker compositions include flammable and/or toxic and/or environmentally suspect chemicals. Therefore, these compositions present certain dangers. Because the Environmental Protection Agency restricts the use of toxic chemicals in coating compositions a number of water based paints have been created to replace the flammable and/or toxic coating compositions.

US Patent 47 92 357 (Bier) discloses paint formulas which contain very large amounts of filler and pigment to create a thick paint to which is added a salt solution, and possibly a binder. This is so because the paint is intended to produce a dried paint layer of a preferred opacity with the special property of preventing seepage by stains on the underlying substrate into the paint as it dries on the substrate. This patent expressis verbis describes within column 5, section 1: "In order to improve the ability of dried paint to withstand high humidity, the paint may further contain additives that renders the surface of the dried paint hydrophobic. .... The hydrophobizing agents help to prevent water absorption after drying, and make it easier to paint on top of the paint layer." The paint is clearly intended not to be removed with water once it is dry. Apparently, water-based paint is adversely effected by high humidity but not to the extent that it can be washed off the substrate with water after it dries.

JP Patent 55 043 153 discloses an aqueous composition comprising 2,5 to 10 wt % of salts, a polyhydric alcohol, 0,01 wt % of water-soluble dye, and a polyol. Said aqueous composition, in fact, is intended for ink jet printing, and for use in printing on paper, but is not intended to be removed by washing. It shows concentrations of colour generally near or well above the maximum 3% in the present invention, the lowest concentration being many times higher than any of the working examples shown in the subject invention. Washability is directly related to the concentration of colour and the ink cannot be assumed to be readily removable from outdoor surfaces or clothing. This patent discloses repeatedly that the higher the concentration of colour is, the more it becomes necessary to choose the colour very carefully, and to add ingredients (such as surfactants) to assure removability from these surfaces. Further, because this prior art patent is limited to 2,5 - 10% of salt it cannot produce a product with the broad range of reduced freezing points which is of essence for temporary marking compositions according to the subject invention. For these reasons, and others relating to the various factors which must be considered in determining an appropriate formula, such as the likely need to use more than 10% antifreeze, the formulas according to this patent would not be suitable for the purposes of the present invention. In addition, the prior art patent requires distilled water and an alcohol which is not used as an antifreeze.

US Patent No. 51 65 966 (Adams) relates to a process of painting snow with a biodegradable solution of a food coloring and a gelling agent such as household gelatine. However, the paint lies only on the top of the snow. Warm water is required to mix with dry ingredients. The paint contains no antifreeze. It is not clear how long it will disperse if left in the cold.

### Object of the Invention

It is an object of the invention to provide compositions which are non-toxic, environmentally acceptable and readily washable for temporary coating of snow or ice and other surfaces such as for trail marking, sports field marking, hazard marking and for decorating outdoor surfaces, particularly snow and ice.

It is another object of the invention to create a water-based temporary covering solution which can be utilized and kept outdoors indefinitely at low temperatures.

It is a further object of the invention to develop a product that provides a quality marking and excludes or limits the "bleeding" effect of a colorant on snow, ice and surfaces such as sand.

It is still another object of the invention to provide a covering composition which can be washed off surfaces by rain and disappear with snow and ice as they melt and will disperse in water.

It is also another object of the invention to create a composition which washes from most fabrics.

It is a further object of the invention to improve the washability of the produced coating from cement, brick, stone and similar surfaces.

It is yet a further object of the invention to lower the cost of a marking composition.

### Summary of the Invention

According to one aspect of this invention there is provided an aqueous marking composition for temporary coating of surfaces according to claim 1.

According to another aspect of the invention an aqueous marking composition for temporary coating of surfaces is proposed which comprises the features of claim 2.

Moreover, the subject invention relates to a method according to claim 10 or 11.

The subclaims refer to further embodiments and developments of this invention.

The compositions are mixtures of ingredients including at least water, one or more anti-freeze agents and one or more water soluble colors. The compositions may include a stabilizer and/or an extender. The stabilizer produces an even coating of color. It may also be necessary to add a stabilizer when two colorants are combined together to improve color quality. The extender controls the melting effect of certain anti-freezes and thereby the bleeding of the colorant on snow or ice.

The colored markings of the invention when applied to the ground or other surfaces will be removable when desired such as being washed away with melting snow or falling rain. The ingredients can preferably be dissolved in water or aqueous compositions. The compositions may also include other agents such as surfactant agents or emulsifiers, pH modifiers or adjusters, antibacterial/fungus agents. UV blockers, additional extenders such as chalk, colored chalk, talc or clay for controlling the quality of the marking and the melting effect of the anti-freeze agents and the like. Extenders may also be used to enlighten the color.

In one embodiment of the invention the marking composition comprises:
a) A water-soluble salt which is suitable to reduce the freezing point temperature of water, selected from the group comprising sodium chloride, potassium chloride, magnesium chloride, calcium chloride, and sodium sulfite in the amounts from about 1 % to about 25% by weight or even higher. Combinations of the above salts may also be used and their amounts can vary.
b) Water soluble or water dispersible colors in the amount from about .01% to about 3% by weight.
c) Water in the amount that adds to 100%.
d) Stabilizer(s) in the amount up to about 3% by weight. Various compounds can be used as a stabilizer.
e) Extender(s) various components can be used as an extender in the amount up to about 3% by weight.

While the marking composition of the invention may only comprise the ingredients a), b) and c), such compositions may also include ingredients d) and e).

The marking compositions of the invention may include other anti-freeze agents added to the above described salt ingredients or substituted for the salts.

In a further aspect of the invention there is provided a method of marking by providing aqueous marking compositions comprising one or more water soluble salts or mixtures of water soluble salts and/or other antifreeze agents, one or more colorants and water and applying the aqueous marking composition to the surface of a substrate to be marked. The marking composition may also include one or more surfactants or emulsifiers, one or more stabilizers, one or more extenders and other ingredients.

### DETAILED DESCRIPTION OF THE INVENTION

The marking compositions of the invention are aqueous compositions which can be readily applied to a variety of substrate surfaces, both indoors and out-of-doors and can be readily removed from the coated surface when desired. The marking compositions of the invention can be applied to substrates such as snow or sand as well as more rigid surfaces such as walls and the ground and are suitable for use at extremely low temperatures as well as at indoor temperatures.

The marking compositions of the invention comprise water, one or more water soluble or water dispersible anti-freeze agents and one or more coloring agents which are preferably water soluble or water dispersible, although coloring agents which are soluble in alcohol or other antifreeze agents may also be suitable.

The water dispersible and preferably water soluble anti-freeze agents suitable for use in the marking compositions of the invention may be any one of a great number of materials which are known as capable of reducing the freezing point of water although the amount and type of such anti-freeze agents used can vary, depending, among other things, on the temperature at which the marking composition is to be stored and transported as well as the temperature at which the marking composition will be applied. Other considerations affecting the choice of antifreezes include toxicity, the inter-reaction with the preferred colorants, flammability, environmental consideration, and availability.

Suitable anti-freeze agents include water soluble salts such as sodium chloride, potassium chloride, magnesium chloride, sodium sulfite, sodium bicarbonate and calcium chloride. For example, a water solution with 21% by weight of sodium chloride is necessary to lower the freezing point temperature to 0° Fahrenheit. For many colors, an 8 oz. container of the composition does not require toxicity labeling under ASTM-D4236 standards, is non-flammable and is soluble. If magnesium chloride is used in the amount of about 21% by weight, the composition can be used at minus 23° Fahrenheit. Calcium chloride in the amount of 25% by weight reduces the temperature of the aqueous solution to -20° Fahrenheit.

Mixtures of one or more of the water soluble salts or mixtures of salts and other anti-freeze agents are also suitable. For example, 10% by weight magnesium chloride and 15% by weight sodium chloride or 10% by weight calcium chloride and 23% by weight sodium chloride will each reduce the temperature of the solution to -20° Fahrenheit. A combination of 20% by weight glycerol and 20% by weight sodium chloride in the solution reduces the freezing point to -10° Fahrenheit. While the amount of such anti-freeze agents used is not critical, in general the marking compositions should contain at least about 1% by weight of such agents and the freezing point of the marking composition need not be substantially reduced.

A solution of a salt in water and color may be used when the quality of marking is not at issue. A stabilizer and/or extender can be added to improve the quality of the marking, especially when high salt concentrations are used.

Also suitable for use as anti-freeze agents in the compositions of the invention are known anti-freeze agents such as alcohols, polyols such as glycerol, glycols such as ethylene glycol and propylene glycol and polyol fatty acid esters or their derivatives. A preferred anti-freeze agent is glycerol. Alcohols, including denatured alcohols such as methanol, ethanol and isopropanol are useful in amounts of from about 23% to about 40% by weight to reduce the freezing point temperature of an aqueous solution to 0° Fahrenheit. These anti-freeze agents may be used in lesser amounts when combined with each other or with a water-soluble salt such as sodium chloride, calcium chloride, or magnesium chloride. These anti-freeze agents have the ability to reduce the freezing point temperature of the aqueous solution well below -6°F, the lower limit or sodium chloride. For example, the combination of 20% by weight of glycerol and 20% by weight of sodium chloride in an aqueous solution reduces the freezing point temperature to -10°F. In general, these anti-freeze agents may be employed in an amount to about 60% by weight or even higher, if desired.

A number of stabilizers including known stabilizers can also be used. Such stabilizers may be either water-soluble or water-dispersible.

The water-soluble stabilizers may be cellulose derivatives such as cellulose either ("Klucel"), ethyl hydroxyethylcellulose, ethyl methylcellulose, hydroxyethylcellulose, hydroxypropyl cellulose, hydroxyethyl methylcellulose, hydroxipropyl methylcellulose, methylcellulose, sodium carboxymethylcellulose, sodium carboxymethyl hydroxyethylcellulose, or sodium cellulose sulfate; acrylates such a polyacrylic acid salts, polyacylamide, acrylamide copolymers; carboxyvinyl polymer ("Carbopol"); polyethylene oxide; polyvinyl alcohol; polyvinyl methyl ether; polyvinylpyrrolidone; exudates from vegetation such as gum arabic, gum karaya, gum tragacath; seed extractives such as guar gum, locust bean gum, starch, starch gum such as dextrin, starch derivative, proteins (soy); seaweed products such as agar-agar, alginates, Irish moss; animal products such as casein and others; tamarind gum; xanthan gum; gum ghatti; or water-soluble silicates. Such stabilizers may be used in amounts preferably of up to about 3% by weight of the solution.

Water-dispersible stabilizers may also be used. Examples thereof are drying oils such as wood oil, treated fish oil, linseed oil, rapeseed oil, etc.; resins such as dispersible alkyd resins, tall oil, alkyd resins, cottonseed alkydes, polymer dispersions, such as polyvinyl acetate and polyvinyl propionate dispersions, acrylic and metacylic resin dispersions and copolymers thereof, polystyrene dispersions, etc. Such stabilizers may be used in amounts preferably of up to about 3% by weight of the solution.

A preferred stabilizer is hydroxypropyl cellulose (HPC). The HPC acts as a thickening agent and assists in creating uniform color and in holding color combinations together. When HPC is used in the amount of above about .5% in solutions containing high salt levels, an adverse effect on the solution is observed. The stabilizer need not be used in applications where the coloring quality is irrelevant and where no color combinations, e.g. red and blue to make purple, are necessary.

Water soluble or water dispersible extenders known in the art such as kaolin, starches, for example corn starch, dextrin, flour, talc, chalk or clay or others can be used generally in an amount from about 0.2% up to about 3% by weight of the marking composition. The preferred ones are talc, chalk or clay. The most preferred extender is talc. Talc minimizes the "spreading" or bleeding effect that occurs when combinations of salts, such as sodium chloride, and FD&C colorants are used.

Extenders selected from the group consisting of talc chalk, kaolin, starch and clay act to impede the effects of penetrating and spreading of the solution into snow or ice when a salt is used as an antifreeze. For decorative and precise marking, especially on snow, it is necessary to prevent undue bleeding on snow surfaces or excessive penetration of color into snow. The extender can also act as an enlightener. For other applications talc or other extenders can be excluded from the compositions.

Suitable colorants may be FD&C or D&C water soluble or water dispersible dyes, and water-insoluble dyes which are soluble in alcohol and other liquid antifreeze agents FD&C or other fluorescents are also suitable.

The colorants may be used alone or in combination.

Several colors have been developed using colorants chosen primarily from the FD&C color list for use with a solution comprising NaCl as the principal antifreeze agent. Other colorants such as azo dyes can be also used. Some of these colorants are not soluble in water, but are soluble in alcohol or other liquid antifreeze agents. Red and yellow colors are used to make orange or red. Blue and red colors are used to create purple. A basic color is: red-FD&C Red #3, or Red #4, or a combination thereof. FD&C Red #40 is not readily usable with sodium chloride to make red color. NaCI causes FD&C Red #40 to become brown. It browns even more under freezing conditions. The other basic colors are blue - FD&C Blue #1 and FD&C Blue #2; yellow - Yellow #5 and/or #6; green - a mixture of Yellow #5 and Green #3. Orange is made with a mixture of Yellow #5 and Red #3; purple is a mixture of Red #3 and Blue #1. Other colors from the FD&C list and the D&C list can be used as well as mixtures of colors. Pastels can be created by reducing the concentration of color. Fluorescents can also be used or created. For example, FD&C Red #3 contains fluorescent components. The choices and concentrations of colors can be adjusted to meet ASTM-D4236 standards for no toxicity warnings.

Effective marking compositions from the standpoint of washability from cement and similar surfaces are sodium chloride solutions which include for example the following colors or combinations of the following colors:

Red - Combinations of FD&C Red #4, and FD&C Red #3 (up to about 0.15%); combinations of FD&C Red #3 (up to about 0.15%) and FD&C Yellow #6; and FD&C Red #4 alone.

Blue - FD&C Blue #2 or FD&C Blue #2 with a small amount of FD&C Green #3 (up to about .02%).

Green - a small amount of FD&C Green #3 (up to about .02%), or FD&C Blue #2 used in combination with D&C Yellow #10; and combinations using FD&C Yellow #5.

Brown -FD&C Red #40 for NaCl and many other salt containing solutions.

Yellow - D&C Yellow #10 can be used alone or combined with small amounts of FD&C Yellow #6 or FD&C Yellow #5. FD&C Yellow #5 alone (up to about .23%) or combined with small amounts of D&C Yellow #10 or with small amounts of FD&C Yellow #6 can be used for sealed containers.

Purple - among other versions - FD&C Blue #2 and FD&C Red #3 combined at about 3 to 1 for deep purple and at about 2 to 1 for light purple.

Orange - FD&C Yellow #6 is just one possibility.

FD&C Blue #1 is not particularly washable from cement or similar surfaces. Small amounts of FD&C Green #3 and up to about .15% Red #3 may be used in salt solutions. These are good colors visually. FD&C Blue #1 is also quite reasonable priced. Washability is improved by adding surfactants.

The non-salt antifreeze solutions allow the FD&C Red #40 to retain its red color.

A color, a stabilizer and a preservative such as sodium benzoate can also be added. An alcohol-containing solution etches the color into snow and limits bleeding even without any extender. Because these antifreeze agents do not have the same melting effect as salts it is possible to eliminate the extender. While the extender can be unnecessary in a non-salt solution it may be still desirable as a color brightener (enlightener).

The marking compositions of the invention may contain one or more surfactants. Surfactants improve washability of coating from various surfaces such as cement. The presence of surfactants allow the use of certain colors which have less than optimal washability from these surfaces or allow for larger amounts of color to be used. In some cases salt and/or antifreeze combinations cause more color adhesion to surfaces. The choice of appropriate surfactants or emulsifiers or detergents can relieve this problem. Known in the art surfactants, emulsifiers or mixtures thereof can be utilized. Nonionic and anionic biodegradable surfactants are preferred. Surfactants can be used in amounts from about .01% to about 10% by weight. Examples of suitable surfactants are: polyethylene oxides, sodium lauryl sulfate, cetyl pyridinium chloride, lecithin, alkyl sulphates, alkyl sulphanates, alkyl sulphonates, polyoxyalkylene surfactants, etc. In some cases, an anti-foaming agent may be added.

Examples of suitable anionic surfactants are as follows:
Sulfated vegetable (castor) oils, trade name Actrasol C75, Manufactured by Climax Performance Materials Corp.;
Sodium lauryl sulfate, trade name SUPRALATE ME Dry, Manufactured by Witco Corp.;
Sodium dioctyl sulfosuccinate, trade name Pentex 99, manufactured by Rhone - Poulenc Co.
Sodium dibutyl naphtalene sulfonate, trade name Rhodacal BX-78; manufactured by Rhone - Poulenc Co.;

Disodium alkyldiphenyl-oxide sulfonate, trade name Rhodacal DSB; manufactured by Rhone - Poulenc Co.

An example of a suitable non-ionic surfactant is a mixture of 60-100% by weight of fatly acid polyoxyethylene glycol and 0.5-1.0% by weight of isopropyl alcohol, trade name ACONOL X-10; manufactured by Huntsman Corporation Canada, Inc.

ACONOL X-10 is an extremely versatile emulsifying agent. Its non-ionic character makes it compatible with both anionic and cationic compounds, stable in moderate concentrations of acid or alkali and tolerant of a varying water hardness.

Surfactants such as RHODAPEX ES manufactured by Rhone - Poulenc Co. and TRITON X-100 (Union Carbide) are also suitable.

IVORY LIQUID SOAP and Season Dish Detergent are also effective with a salt solution and safe.

IVORY LIQUID SOAP is composed of the following ingredients: water, sodium laureth sulfate, sodium lauryl sulfate, lauramide DEA, sodium sulfate, cocamidoproply betaine, sodium chloride, styrene/acrylate copolymer, octoxynol-9, DHDM hydrantoin, tetrasodium, EDTA, citric acid; manufactured by Procter & Gamble Co.;

SEASON DISH DETERGENT is a mixture of non-ionic and anionic surfactants distributed by Season Products Corp.

Some of the surfactants have antifreeze and/or stabilizing properties and this might cause reduction or even elimination of the need for other antifreezes or stabilizers. In this case, surfactants in amounts in excess of 10% may be used. Surfactants may also be used to modify the appearance of the color on a surface.

Some additional water soluble or water dispersible compounds such as silicates, silicones, phosphates, pH neutralizers, polymers, gelling agents, pigments, polysaccharides, colloids, fatty acids and other compounds can be added to marking compositions. For example, pH neutralizers can be helpful in removing colors such as FD&C Blue #1: disodium salt of 4-((4-(N-ethyl-p-sulfobenzylamino)-phenyl)-(2-sulfoniumphenyl)-methylene) - (1(N-ethyl-N-p-sulfobenzyl)-sup2, 5-cyclo-hexadienimine), FD&C Green #3: Disodium salt of 4-((4-(N-ethyl-p-sulfobensylamino)-phenyl-(4-hydroxy-2-sulfobenzyl)-sup2,3-cyclohexadienimine), FD&C Red #3: Disodium salt of 9-0-carboxyphenyl-6-hydroxy-2, 4, 5, 7 teteraiodo-3- isoxanthone (erythrosin) from cement and similar surfaces. However, pH neutralizers can be avoided if solutions are properly balanced.

### EXAMPLE 1

Marking compositions were prepared from the following ingredients:

| | PRODUCT 1 | PRODUCT 2 | PRODUCT 3 |
|---|---|---|---|
| INGREDIENT | % BY WEIGHT | % BY WEIGHT | % BY WEIGHT |
| MgCl₂ | 0% | 0% | 20% |
| NaCl | 20% | 16% | 0% |
| CaCl₂ | 0% | 2.8% | 0% |
| Color | .25%-3% | .5% | .5% |
| HPC | .5% | .5% | .5% |
| Talc | .5% | .5% | .5% |
| Water | Balance to 100% | Balance to 100% | Balance to 100% |

The dry ingredients were mixed with water at room temperature.

### EXAMPLE 2

The cost of the composition of an orange and red colorant based on the formulation of Product 3 was calculated for the manufacture of 20,000 pounds of the color composition as follows:

| INGREDIENT | $/lb. | Lb. RM* | TOTAL RMC** |
|---|---|---|---|
| Water | .0015 | 15,700 | 23.55 |
| 20% MgCl₂ | .50 | 4,000 | 2,000.00 |
| .5% HPC | 6.40 | 100 | 640.00 |
| .5% Talc | .29 | 100 | 29.00 |
| .15% Red #3 | 31.40 | 50 | 1,570.00 |
| .15% Yellow #6 | 8.95 | 50 | 447.50 |
| | | 20,000 | 4,710.05 |

| | | | |
|---|---|---|---|
| *RM = raw material | | | |
| **RMC = raw material cost | | | |

From the foregoing, a cost per 8 fluid ounce container was calculated at $0.12.

### EXAMPLE 3

A "kit" of four different colors was made using the following ingredients:

| COLOR | PERCENTAGES BY WEIGHT | RAW MATERIAL | #LBS RAW MATERIAL |
|---|---|---|---|
| | 87.83 | Water | 157,425 |
| | 0.5% | HPC | 1,000 |
| | 0.5% | Talc | 1,000 |
| | 20.0% | NaCI | 40,000 |
| Blue | 0.3% | FD&C Blue #1 | 150 |
| Red | 0.3% | FD&C Red #3 | 150 |
| Green | 0.21% | FD&C Yellow #5 | 105 |
| | 0.09% | FD&C Green #3 | 45 |
| Yellow | 0.235% | FD&C Yellow #5 | 110 |
| | 0.035% | FD&C Yellow #6 | 15 |
| | | | 200,000 |

### EXAMPLE 4

The following products were prepared by mixing the ingredients listed below at room temperature:

| **PRODUCT NO. 1** | | |
|---|---|---|
| INGREDIENT | AMOUNT IN GRAMS | FREEZING POINT |
| Color | 3.0 | |
| HPC | 5.0 | |
| Talc | 5.0 | (0° F) |
| NaCl | 210.0 | |
| Water | 777.0 | |
| TOTAL | 1,000.0 | |

| **PRODUCT NO. 2** | | |
|---|---|---|
| INGREDIENT | AMOUNT IN GRAMS | FREEZING POINT |
| Color | 3.0 | |
| HPC | 5.0 | |
| Talc | 5.0 | (+10.7° F) |
| NaCl | 160.0 | |
| Water | 827.0 | |
| TOTAL | 1,000.0 | |

| **PRODUCT NO. 3** | | |
|---|---|---|
| INGREDIENT | AMOUNT IN GRAMS | FREEZING POINT |
| Color | 5.0 | |
| HPC | 5.0 | |
| Talc | 2.5 | (-10° F) |
| NaCl | 200 | |
| Glycerol | 200 | |
| Water | 587.5 | |
| TOTAL | 1,000 | |

| **PRODUCT NO. 4** | | |
|---|---|---|
| INGREDIENT | AMOUNT IN GRAMS | FREEZING POINT |
| Color | 5.0 | |
| HPC | 5.0 | |
| Talc | 2.5 | (-23°F) |
| MgCl₂ | 210 | |
| Water | 777.5 | |
| TOTAL | 1000 | |

### EXAMPLE 5

A "kit" of four different colors was made using the following ingredients:

| COLOR | PERCENTAGES BY WEIGHT | RAW MATERIAL | #LBS RAW MATERIAL |
|---|---|---|---|
| | | Water | 157,300 |
| | 0.5% | HPC (stabilizer) | 1,000 |
| | 0.5% | Talc (extender) | 1,000 |
| | 20.0% | Glycerol | 40,000 |
| Blue | 0.4% | FD&C Blue #2 | 200 |
| Red | 0.3% | FD&C Red #40 | 150 |
| Purple | 0.2% | FD&C Blue #2 | 100 |
| | 0.1% | FD&C Red#3 | 50 |
| Yellow | 0.4% | D&C Yellow #10 | 200 |
| | | | 200,000 |

### EXAMPLE 6

Sample of solutions using dextrin, linseed oil and carboxymethylcellulose (CMC) as stabilizers were prepared as follows:

| **PRODUCT NO. 1** | |
|---|---|
| INGREDIENT | PERCENTAGE BY WEIGHT |
| NaCl | 16.0% |
| Talc | .5% |
| Dextrin | 1.5% |
| FD&C Green #3 | .02% |
| D&C Yellow #10 | .28% |
| Water | 81.7% |
| | 100.0% |

| **PRODUCT NO. 2** | |
|---|---|
| INGREDIENT | PERCENTAGE BY WEIGHT |
| NaCI | 16.0% |
| Talc | .5% |
| Linseed Oil | .5% |
| FD&C Red #40 | .3% |
| Water | 82.7% |
| | 100.0% |

| **PRODUCT NO. 3** | |
|---|---|
| INGREDIENT | PERCENTAGE BY WEIGHT |
| NaCl | 15.0% |
| Glycerol | 15.0% |
| Carboxymethylcellulose | 1.0% |
| FD&C Yellow #6 | .3% |
| Talc | 1.0% |
| Water | 67.7% |
| | 100.0% |

The washability of cement and other similar surfaces can be improved with an addition of surfactants to certain of the compositions produced according to the examples 1-6.

### EXAMPLE 7

Solutions using surfactants were prepared as follows:

| **PRODUCT NO. 1** | |
|---|---|
| INGREDIENT | PERCENTAGE BY WEIGHT |
| HPC | .5% |
| Glycerine | 15.0% |
| Talc | .5% |
| FD&C Blue #1 | .25% |
| Duponol ME Dry | 2.0% |
| Water | 81.75% |
| | 100.0% |

| **PRODUCT NO. 2** | |
|---|---|
| INGREDIENT | PERCENTAGE BY WEIGHT |
| NaCI | 5.0% |
| Glycerine | 15.0% |
| CMC | .5% |
| Talc | .5% |
| FD&C Blue #1 | .25% |
| Duponol ME Dry | 1.0% |
| Rhodacal BX-78 | 1.0% |
| Water | 76.75 % |
| | 100.0% |

| **PRODUCT NO. 3** | |
|---|---|
| INGREDIENT | PERCENTAGE BY WEIGHT |
| HPC | .5% |
| Talc | .5% |
| FD&C Green #3 | .3% |
| NaCI | 16.0% |
| Rhodacol BX-78 | 1.0% |
| Ivory Liquid Soap | 1.0% |
| Water | 80.7% |
| | 100.0% |

| **PRODUCT NO. 4** | |
|---|---|
| INGREDIENT | PERCENTAGE BY WEIGHT |
| HPC | .5% |
| Talc | .5% |
| FD&C Blue #1 | .25% |
| Season Dish Detergent | 1.0% |
| Aconof X-10 | 1.0% |
| NaCl | 10.0% |
| Glycerine | 15.0% |
| Water | 71.75% |
| | 100.0% |

Each solution showed improved washability from cement and other similar surfaces.

The produced colors can be washed out from various surfaces. For example, cement or mortar or brick or grass is washable with a hose or rain. At the beach, a bucket of water or two removes the color easily. Colors appear to come out of most clothing with normal laundering.

The liquid product can be prepacked in spray containers, cans, jars and other containers. The product can also be prepared as a gel, a foam, a concentrate or a powder and prepacked accordingly in drums or other large containers. The concentrate or powder, to be mixed with water by the user, would be appropriate for large quantity applications. For small quantity applications, packets of concentrate or dry mixture may also be appropriate. Dry product can also be sprinkled on snow or ice or could be sprinkled on other surfaces and then have water applied to it. The prepared product may be utilized for decorative purposes and entertainmemt and for marking sports fields, particularly ski, sledding and skating ones. It can also be utilized for construction sites, "SOS" - signs for skiers, hikers and climbers, for designating temporary crosswalks, for marking airport runways, for marking hazards on snow or ice, etc. In particular, the product is usable on deserts, beaches, sand and for other purposes. For example, the salt solutions are usable for arts and crafts projects.

## Claims

1. An aqueous marking composition for temporary coating of surfaces which is readily washable with water when desired, and can be readily removed by water, such as rain from a surface of a substrate, to which it is applied, such as outdoor surfaces covered in snow or ice, surfaces for trail marking, sports field marking, hazard marking, sand, cement, brick, stone, fabrics, etc., comprising
a) at least 1% by weight of water soluble salts suitable to reduce the freezing point temperature of water which salts are selected from the group consisting of sodium chloride, potassium chloride, magnesium chloride, calcium chloride, sodium sulfite, and mixtures of the same, with the exception of the presence of said forementioned salts in connection with aqueous ink compositions for record printers for improving low temperature characteristics, and
b) at least 0,01% by weight of a colouring agent that is water soluble, or soluble in a liquid antifreeze agent,
c) the balance to 100% is water,
said marking composition being adapted to provide a coloured covering for a substrate surface, which can be readily removed from said substrate surface by being washed with water, such as rain.

2. An aqueous marking composition for temporary coating of surfaces which is readily washable with water when desired, and can be readily removed by water, such as rain from a surface of a substrate, to which it is applied, such as outdoor surfaces covered in snow or ice, surfaces for trail marking, sports field marking, hazard marking, sand, cement, brick, stone, fabrics, etc., comprising
a) a water soluble antifreeze agent selected from the group consisting of alcohols, polyols, polyol fatty acid esters and mixtures of the same, with the exception of the presence of polyols in connection with aqueous ink compositions for jet record printers for improving low temperature characteristics,
b) at least 0,01 % by weight of a colouring agent that is water soluble, or soluble in a liquid antifreeze agent,
c) the balance to 100% is water,
said marking composition being adapted to provide a coloured covering for a substrate surface, which can be readily removed from said substrate surface by being washed with water, such as rain.

3. The aqueous marking composition as claimed in claim 1, wherein said antifreeze agent is a water soluble antifreeze agent selected from the group consisting of water soluble salts, alcohols, polyols, polyol fatty acid esters and mixtures of the same.

4. An aqueous marking composition as claimed in claim 1 or 2, further comprising at least one extender, such as talc, chalk or clay.

5. An aqueous marking composition as claimed in claim 1, comprising by weight sodium chloride in the amount from about 1% to about 23,3%, a colorant in the amount from about 0,01 % to about 3%, a hydroxypropyl cellulose in the amount of up to about 0,5% and a talc in the amount of from about 0,25% to about 3%.

6. An aqueous marking composition as claimed in claim 1 or 5, further comprising antifreeze selected from the group consisting of alcohol, polyol, polyol fatty acid esters, their derivatives or mixtures thereof.

7. An aqueous marking composition as claimed in claim 6, wherein polyol is selected from the group consisting of glycerol and propylene glycol.

8. An aqueous marking composition as claimed in claim 6, further comprising antibacterial and anti-fungus agents.

9. An aqueous marking composition as claimed in claim 6, wherein said antibacterial and anti-fungus agent is sodium benzoate.

10. An aqueous marking composition as claimed in claim 6, further comprising at least one stabilizer.

11. An aqueous marking composition as claimed in claim 6, further comprising at least one extender.

12. A method of temporary marking a substrate surface with a coating that is visually determinable for a desired period of time providing an aqueous marking composition which is adapted to provide a coloured covering for said substrate surface and is readily removable when desired, comprising
a) at least 1% by weight of a water soluble or water dispersible salt suitable to reduce the freezing point temperature of water selected from the group consisting of sodium chloride, potassium chloride, magnesium chloride, calcium chloride, sodium sulfite, and mixtures of the same, and/or
b) a water soluble or a water dispersible antifreeze agent selected from the group consisting of alcohols, polyols, polyol fatty acid esters and mixtures of the same,
c) at least 0,01 % by weight of a colouring agent that is water soluble or water dispersible, or soluble or dispersible in a liquid antifreeze agent,
d) the balance to 100% is water,
and applying said coating composition to a portion of said substrate surface to be marked.

13. A method of temporary marking of a substrate comprising the steps of:
a) selecting a surface for marking,
b) applying an aqueous marking composition comprising at least one water soluble salt, selected from the group consisting of sodium chloride, potassium chloride, calcium chloride, sodium sulfite and magnesium chloride, a colorant, an extender and a stabilizer.

14. A method of temporary marking of a substrate comprising the steps of:
a) selecting a surface for marking,
b) applying a marking composition comprising an antifreeze selected from the group consisting of alcohol, polyol and polyol fatty acid esters, their derivatives or mixtures thereof, a colorant, an extender and a stabilizer.

15. A method of marking as claimed in claim 13, wherein the marking composition is sprayed on the surface.

16. A method of marking as claimed in claim 13 or 14, wherein the marking composition further contains at least one additional antifreeze.

17. A marking composition as claimed in claim 1 or 2 further comprising at least one surfacting agent.

18. A marking composition as claimed in claim 17, wherein the surfactant(s) is (are) selected from the group consisting of detergent and soap.

19. A method of temporary marking of a substrate comprising the steps of:
a) selecting a surface for marking,
b) applying a marking composition comprising at least one antifreeze selected from the group consisting of alcohol, polyol, and polyol fatty acid esters, their derivatives or mixture thereof, a colorant, an extender, a surfacting agent, and a stabilizer.

20. Use of water soluble or water dispersable salts in the amount of at least 1% by weight to reduce the freezing point temperature of water, which salts are selected from the group consisting of sodium chloride, potassium chloride, magnesium chloride, calcium chloride, sodium sulfite, and mixtures of the same, and/or water soluble or water dispersable antifreeze agents selected from the group consisting of alcohols, polyols, polyol fatty acid esters and mixtures of the same, a colouring agent in the amount of at least 0,01% by weight which agent is soluble or dispersable in water or alternatively in a liquid antifreeze agent, with the balance to 100% of water, for a marking composition being adapted to provide a coloured covering for a substrate surface which can be readily removed by being washed with water, such as rain.

## Patentansprüche

1. Wasserhaltige Markier-Zusammensetzung zum vorübergehenden Überziehen von Oberflächen, die auf einfache Weise im Bedarfsfall mit Wasser abwaschbar ist und die mit Hilfe von Wasser, z.B. in Form von Regen, von einer Oberfläche einer Trägerunterlage, auf der sie aufgebracht ist, z.B. Freiluftflächen, die mit Schnee oder Eis bedeckt sind, Oberflächen zur Wege-Markierung, Markierungen für Sportfelder, Gefahren-Markierungen, Markierungen von Sand, Beton, Ziegel, Stein, Gewebe usw., auf einfache Weise entfernt werden kann, mit
a) mindestens 1 Gewichtsprozent wasserlöslichen Salzen, die in der Lage sind, die Gefrierpunkttemperatur von Wasser zu reduzieren, und die aus der Gruppe ausgewählt werden, die aus Natriumchlorid, Kaliumchlorid, Magnesiumchlorid, Kalziumchlorid, Natriumsulfit und Mischungen daraus bestehen, mit Ausnahme des Vorhandenseins der vorerwähnten Salze in Verbindung mit wasserhaltigen Tintenzusammensetzungen für Tintenstrahldrucker zur Verbesserung der Niedrigtemperatur-Eigenschaften,
b) mindestens 0,01 Gewichtsprozent eines Färbungsmittels, das wasserlöslich ist oder das in einem flüssigen Gefrierschutzmittel löslich ist,
c) der Rest bis 100% ist Wasser,
wobei die Markier-Zusammensetzung in der Lage ist, einen Farbüberzug für eine Unterlagenoberfläche zu erzielen, die auf einfache Weise von der Unterlagen-oberfläche durch Abwaschen mit Wasser, z.B. in Form von Regen, entfernt werden kann.

2. Wasserhaltige Markier-Zusammensetzung zum vorübergehenden Überziehen von Oberflächen, die auf einfache Weise im Bedarfsfalle mit Wasser abwaschbar ist und die mit Hilfe von Wasser, z.B. in Form von Regen, von einer Oberfläche einer Trägerunterlage, auf der sie aufgebracht ist, z.B. Freiluftflächen, die mit Schnee oder Eis bedeckt sind, Oberflächen zur Wege-Markierung, Markierungen für Sportfelder, Gefahren-Markierungen, Markierungen von Sand, Beton, Ziegel, Stein, Gewebe usw., auf einfache Weise entfernt werden kann, mit
a) einem wasserlöslichen Gefrierschutzmittel, das aus der Gruppe ausgewählt wird, die aus Alkoholen, Polyolen, Polyol-Fettsäureestern und Mischungen daraus besteht, mit Ausnahme des Vorhandenseins von Polyolen in Verbindung mit wasserhaltigen Tintenzusammensetzungen für Tintenstrahldrucker zur Verbesserung der Niedrigtemperatur-Eigenschaften,
b) mindestens 0,01 Gewichtsprozent eines Färbungsmittels, das wasserlöslich ist oder das in einem flüssigen Gefrierschutzmittel gelöst ist,
c) der Rest bis 100% ist Wasser,
wobei die Markier-Zusammensetzung in der Lage ist, einen Farbüberzug für die Oberfläche einer Unterlage zu liefern, die auf einfache Weise von der Oberfläche der Unterlage dadurch entfernt werden kann, dass sie mit Wasser, z.B. in Form von Regen, abgewaschen wird.

3. Wasserhaltige Markier-Zusammensetzung nach Anspruch 1, bei der das Gefrierschutzmittel ein wasserlösliches Gefrierschutzmittel ist, das aus der Gruppe ausgewählt wird, die aus wasserlöslichen Salzen, Alkoholen, Polyol-Fettsäureestern und Mischungen daraus besteht.

4. Wasserhaltige Markier-Zusammensetzung nach einem der Ansprüche 1 oder 2, mit mindestens einem Streckungsmittel, z.B. Talk, Kreide oder Lehm.

5. Wasserhaltige Markier-Zusammensetzung nach Anspruch 1, mit Natriumchlorid mit einem Anteil von etwa 1 bis etwa 23,3 Gewichtsprozent, einem Färbungsmittel mit einem Anteil von etwa 0,01 bis etwa 3 Gewichtsprozent, einer Hydroxypropyl-Zellulose mit einem Anteil von bis etwa 0,5 Gewichtsprozent und einem Talk in der Größenordnung von etwa 0,25 bis etwa 3 Gewichtsprozent.

6. Wasserhaltige Markier-Zusammensetzung nach Anspruch 1 oder 5, mit einem Gefrierschutzmittel, das aus der Gruppe ausgewählt ist, die aus Alkohol, Polyol, Polyol-Fettsäureester sowie den Derivaten oder Mischungen daraus besteht.

7. Wasserhaltige Markier-Zusammensetzung nach Anspruch 6, bei der Polyol aus der Gruppe ausgewählt wird, die aus Glyzerin und Propylen-Glyzerin besteht.

8. Wasserhaltige Markier-Zusammensetzung nach Anspruch 6, mit antibakteriellen und antifungiziden Mitteln.

9. Wasserhaltige Markier-Zusammensetzung nach Anspruch 6, bei der das antibakterielle und antifungizide Mittel Natrium-Benzoat ist.

10. Wasserhaltige Markier-Zusammensetzung nach Anspruch 6, mit mindestens einem Stabilisierungsmittel.

11. Wasserhaltige Markier-Zusammensetzung nach Anspruch 6, mit mindestens einem Streckungsmittel.

12. Verfahren zum vorübergehenden Markieren einer Oberfläche einer Trägerunterlage mit einem Überzug, der visuell eine bestimmte Zeit lang festlegbar ist und eine wasserhaltige Markier-Zusammensetzung ergibt, die in der Lage ist, einen Farbüberzug für die Trägerunterlage zu liefern, und auf einfache Weise im Bedarfsfall entfernt werden kann, mit
a) mindestens 1 Gewichtsprozent von wasserlöslichem oder in Wasser dispergierbarem Salz, das geeignet ist, die Gefrierpunkttemperatur von Wasser zu reduzieren, und aus der Gruppe besteht, die Natriumchlorid, Kaliumchlorid, Magnesiumchlorid, Kalziumchlorid, Natriumsulfit und Mischungen daraus umfaßt, und/oder
b) einem wasserlöslichen oder in Wasser dispergierbarem Gefrierschutzmittel, das aus der Gruppe ausgewählt ist, die aus Alkoholen, Polyolen, Polyol-Fettsäureestern und Mischungen daraus besteht,
c) mindestens 0,01 Gewichtsprozent eines Färbungsmittels, das wasserlöslich oder in Wasser dispergierbar ist, oder das in einem flüssigen Gefrierschutzmittel lösbar oder dispergierbar ist,
d) der Rest bis 100% ist Wasser, wobei
die Überzugskompositionen auf einen Teil der zu markierenden Unterlagen-Oberfläche aufgebracht wird.

13. Verfahren zum vorübergehenden Markieren einer Unterlage, **dadurch gekennzeichnet, dass**
a) eine Oberfläche zum Markieren ausgewählt wird,
b) eine wasserhaltige Markier-Zusammensetzung mit mindestens einem wasserlöslichen Salz, ausgewählt aus der Gruppe, die aus Natriumchlorid, Kaliumchlorid, Kalziumchlorid, Natriumsulfit und Magnesiumchlorid, einem Färbungsmittel, einem Streckungsmittel und einem Stabilisator besteht, aufgebracht wird.

14. Verfahren zum vorübergehenden Markieren einer Unterlage, **dadurch gekennzeichnet, dass**
a) eine Oberfläche zum Markieren ausgewählt wird,
b) eine Markier-Zusammensetzung, die ein Gefrierschutzmittel aufweist, das aus der Gruppe ausgewählt wird, die aus Alkohol, Polyol und Polyol-Fettsäureestern, ihren Derivaten oder Gemischen, einem Färbungsmittel, einem Streckungsmittel und einem Stabilisator besteht, aufgebracht wird.

15. Verfahren zum Markieren nach Anspruch 13, bei dem die Markier-Zusammensetzung auf die Oberfläche aufgesprüht wird.

16. Verfahren zum Markieren nach Anspruch 13 oder 14, bei dem die Markier-Zusammensetzung ferner mindestens ein zusätzliches Gefrierschutzmittel enthält.

17. Markier-Zusammensetzung nach Anspruch 1 oder 2, **gekennzeichnet durch** mindestens ein Oberflächen-Behandlungsmittel.

18. Markier-Zusammensetzung nach Anspruch 17, **dadurch gekennzeichnet, dass** das (die) Oberflächen-Behandlungsmittel aus der Gruppe ausgewählt ist (sind), die aus einem Detergens und Seife besteht.

19. Verfahren zum vorübergehenden Markieren eines Substrats, **dadurch gekennzeichnet, dass**
a) eine Oberfläche zum Markieren ausgewählt wird,
b) eine Markier-Zusammensetzung aufgebracht wird, die mindestens ein Gefrierschutzmittel enthält, das aus der Gruppe ausgewählt ist, die Alkohol, Polyol und Polyol-Fettsäureester, ihre Derivate oder ein Gemisch davon, ein Färbungsmittet, ein Streckungsmittel, ein Oberflächen-Behandlungsmittel und ein Stabilisierungsmittel besitzt.

20. Verwendung von wasserlöslichen oder in Wasser dispergierbaren Salzen in der Größenordnung von mindestens 1 Gewichtsprozent, um die Gefrierpunkttemperatur von Wasser zu senken, wobei die Salze aus der Gruppe ausgewählt sind, die aus Natriumchlorid, Kaliumchlorid, Magnesiumchlorid, Kalziumchlorid, Natriumsulfit und Gemischen daraus bestehen und/oder wasserlösliche oder in Wasser dispergierbare Gefrierschutzmittel aufweisen, die aus der Gruppe ausgewählt sind, die aus Alkoholen, Polyolen, Polyol-Fettsäureestern und Mischungen daraus bestehen, mit einem Färbungsmittel mit einem Anteil von mindestens 0,01 Gewichtsprozent, das in Wasser oder alternativ in einem flüssigen Gefrierschutzmittel lösbar oder dispergierbar ist, wobei der Rest bis 100% Wasser beträgt, um eine Markier-Zusammensetzung zu erzielen, die in der Lage ist, einen gefärbten Überzug für eine Unterlagen-Oberfläche zu liefern, die auf einfache Weise durch Waschen mit Wasser, z.B. in Form von Regen, entfernt werden kann.

## Revendications

1. Composition de marquage aqueuse destinée au revêtement temporaire de surfaces, appliquée sur ces surfaces ou sur un substrat comme des surfaces extérieures couvertes de neige ou de glace, des surfaces de marquage de pistes, de terrain de sport ou de dangers, du sable, du ciment, de la brique, de la pierre, de tissus, etc. , facile à laver et à retirer avec de l'eau, comme de la pluie par exemple, et comprenant
a) au moins 1 % en poids de sels solubles dans l'eau et aptes à réduire le point de congélation de l'eau, lesdits sels étant sélectionnés parmi le groupe constitué de chlorure de sodium, chlorure de potassium, chlorure de magnésium, chlorure de calcium, sulfate de sodium et autres mélanges de ces sels, ces sels ne pouvant toutefois pas être utilisés avec des compositions aqueuses à encre indélébile pour imprimantes, en vue d'améliorer les propriétés à basse température,
b) au moins 0,01 % en poids d'un agent colorant soluble dans l'eau ou dans un antigel liquide,
c) le reste étant constitué d'eau,
et la dite composition de marquage étant adaptée en vue de fournir un revêtement coloré pour une surface de substrat, ledit revêtement pouvant être facilement retiré de ladite surface de substrat avec de l'eau, comme la pluie par exemple.

2. Composition de marquage aqueuse destinée au revêtement temporaire de surfaces, appliquée sur ces surfaces ou sur un substrat comme des surfaces extérieures couvertes de neige ou de glace, des surfaces de marquage de pistes, de terrains de sport ou de dangers, du sable, du ciment, de la brique, de la pierre, de tissus, etc , facile à laver et à retirer avec de l'eau, comme de la pluie par exemple, et comprenant
a) un antigel soluble dans l'eau sélectionné parmi un groupe composé d'alcools, de polyols, d'esters d'acides gras de polyols et de mélanges de ces derniers, les polyols ne pouvant pas être utilisés avec des compositions aqueuses à base d'encre indélébile pour imprimantes à jet d'encre, en vue d'améliorer les propriétés à basse température,
b) au moins 0,01 % en poids d'un agent colorant soluble dans l'eau ou dans un antigel liquide,
c) le reste étant constitué d'eau, et ladite composition de marquage étant adaptée afin de fournir un revêtement coloré pour une surface de substrat, ledit revêtement pouvant être retiré facilement de ladite surface du substrat avec de l'eau, comme la pluie, par exemple.

3. Composition de marquage aqueuse décrite dans la revendication 1, **caractérisée en ce que** ledit antigel est un agent antigel soluble dans l'eau et sélectionné parmi le groupe composé de seuls solubles dans l'eau, d'alcools, de polyols, d'esters d'acides gras de polyols et de mélanges de ces derniers.

4. Composition de marquage aqueuse décrite dans la revendication 1 ou 2 et comprenant au moins un agent d'allongement comme du talk, de la craie ou de l'argile.

5. Composition de marquage aqueuse décrite dans la revendication 1, comprenant quelque 1 % à 23,3 % en poids de chlorure de sodium, quelque 0,01 % à 3 % d'un colorant, jusqu'à 0,5 % environ en poids de cellulose hydroxypropylique et quelque 0,25 % à 3 % en poids de talc.

6. Composition de marquage aqueuse décrite dans la revendication 1 ou 5 et comprenant également un antigel sélectionné parmi le groupe composé d'alcools, de polyols, d'esters d'acides gras de polyols, de leurs dérivés ou de mélanges de ces derniers.

7. Composition de marquage aqueuse décrite dans la revendication 1, **caractérisée en ce que** le polyol est sélectionné parmi le groupe composé de glycérol et de glycol de propylène.

8. Composition de marquage aqueuse décrite dans la revendication 6 et comprenant également des agents bactéricides et fongicides.

9. Composition de marquage aqueuse décrite dans la revendication 6, **caractérisée en ce que** ledit agent bactéricide et fongicide est du benzoate de sodium.

10. Composition de marquage aqueuse décrite dans la revendication 6 et comprenant également au moins un stabilisateur.

11. Composition de marquage aqueuse décrite dans la revendication 6 et comprenant également au moins un agent d'allongement.

12. Méthode de marquage temporaire d'une surface de substrat, un revêtement déterminable visuellement pendant un laps de temps souhaité fournissant une composition de marquage aqueuse facile à retirer au moment souhaité, adaptée en vue de fournir un revêtement coloré pour ladite surface de substrat, et comprenant
a) au moins 1 % en poids d'un sel soluble ou dispersible dans l'eau apte à réduire le point de congélation de l'eau et sélectionné parmi le groupe composé de chlorure de sodium, chlorure de potassium, chlorure de magnésium, chlorure de calcium, sulfate de sodium et de mélanges de ces derniers, et / ou
b) un antigel soluble ou dispersible dans l'eau et sélectionné parmi le groupe composé d'alcools, de polyols, d'esters d'acides gras de polyols et de mélanges de ces derniers,
c) au moins 0,01 % en poids d'un agent colorant soluble ou dispersible dans l'eau ou dans un antigel liquide,
d) le reste étant constitué d'eau,
et ladite composition de revêtement étant appliquée sur une partie de ladite surface de substrat à marquer.

13. Méthode de marquage temporaire d'un substrat comprenant les étapes suivantes :
a) sélection d'une surface en vue du marquage
b) application d'une composition de marquage aqueuse comprenant au moins un sel soluble dans l'eau, sélectionné parmi le groupe composé de chlorure de sodium, chlorure de potassium, chlorure de calcium, sulfate de sodium et chlorure de magnésium, d'un colorant, d'un agent d'allongement et d'un stabilisateur.

14. Méthode de marquage temporaire d'un substrat comprenant les étapes suivantes :
a) sélection d'une surface en vue du marquage,
b) application d'une composition de marquage comprenant un antigel sélectionné parmi le groupe composé d'alcools, de polyols, d'esters d'acides gras de polyols, de leurs dérivés ou de mélanges de ces derniers, d'un colorant, d'un agent d'allongement et d'un stabilisateur.

15. Méthode de marquage décrite dans la revendication 13, **caractérisée en ce que** la composition de marquage est atomisée sur la surface.

16. Méthode de marquage décrite dans la revendication 13 ou 14, **caractérisée en ce que** la composition de marquage contient également au moins un antigel supplémentaire.

17. Composition de marquage décrite dans la revendication 1 ou 2 et comprenant au moins un agent de surface.

18. Composition de marquage décrite dans la revendication 17, **caractérisée en ce que** le(s) agent(s) de surface est (sont) sélectionnés parmi le groupe composé d'un détergent et d'un savon.

19. Méthode de marquage temporaire d'un substrat comprenant les étapes suivantes :
a) sélection d'une surface en vue du marquage,
b) application d'une composition de marquage comprenant au moins un antigel sélectionné parmi le groupe composé d'alcools, de polyols, d'esters d'acides gras de polyols, de leurs dérivés ou de mélanges de ces derniers, d'un colorant, d'un agent d'allongement, d'un agent de surface et d'un stabilisateur.

20. Utilisation d'au moins 1 % en poids de sels solubles ou dispersibles dans l'eau en vue de réduire le point de congélation de l'eau, lesdits sels étant sélectionnés parmi le groupe composé de chlorure de sodium, chlorure de potassium, chlorure de magnésium, chlorure de calcium, sulfate de sodium et de mélanges de ces derniers, et/ou d'agents antigels solubles ou dispersibles dans l'eau, sélectionnés parmi le groupe composé d'alcools, de polyols, d'esters d'acides gras de polyols et de mélanges de ces derniers, d'au moins 0,01 % en poids d'un agent colorant soluble ou dispersible dans l'eau ou dans un antigel liquide, le reste étant constitué d'eau, pour une composition de marquage adaptée en vue de fournir un revêtement coloré pour une surface de substrat facile à retirer avec de l'eau, comme la pluie, par exemple.
